# EUROPÄISCHE PATENTSCHRIFT

(11) **EP 2 539 168 B1**
(45) Veröffentlichungstag und Bekanntmachung des Hinweises auf die Patenterteilung: **25.02.2015**
(21) Anmeldenummer: 10794881.2
(22) Anmeldetag: 09.12.2010
(51) Int. Cl.: B60K 5/02, B60K 6/40, B60K 6/52, B60K 7/00, B60K 1/04, B60K 6/10

(54) **KRAFTFAHRZEUG**
MOTOR VEHICLE
VÉHICULE À MOTEUR

(30) Priorität: 23.02.2010 DE 102010009875
(43) Veröffentlichungstag der Anmeldung: 02.01.2013
(73) Patentinhaber: Dr.Ing. H.C. F. Porsche Aktiengesellschaft, 70435 Stuttgart (DE)
(72) Erfinder: FUECHTNER, Martin, 70197 Stuttgart (DE); MEYER-EBELING, Joerg, 70197Stuttgart (DE)
(86) Internationale Anmeldenummer: PCT/EP2010/007499
(87) Internationale Veröffentlichungsnummer: WO 2011/103899

(56) Entgegenhaltungen:
- WO-A1-2009/014254
- DE-A1- 10 216 246
- DE-A1-102006 041 160
- US-A1- 2008 196 957
- US-A1- 2009 242 289
- US-A1- 2009 315 359

## Beschreibung

Die Erfindung betrifft ein Kraftfahrzeug gemäß dem Oberbegriff des Patentanspruchs 1.

Die Grundkomponenten eines Kraftfahrzeugs sind ein sogenannter Aufbau sowie Antriebsstrang. Der Aufbau wird im Wesentlichen von einer Kraftfahrzeugkarosserie definiert, die üblicherweise einen Insassenraum, einen Motorraum sowie einen Gepäckraum bereitstellt. Der Antriebsstrang eines Kraftfahrzeugs umfasst eine Vorderachse, eine Hinterachse, ein Antriebsaggregat sowie ein Getriebe.

Die hier vorliegende Erfindung betrifft ein Kraftfahrzeug mit einem Aufbau und einem Antriebsstrang, dessen Antriebsaggregat als Hybridantrieb ausgebildet ist. Ein Hybridantrieb umfasst eine Brennkraftmaschine sowie mindestens eine elektrische Maschine. Die Brennkraftmaschine des Hybridantriebs ist ausgehend von mindestens einem Kraftstofftank mit Kraftstoff versorgbar. Die oder jede elektrische Maschine des Hybridantriebs ist im motorischen Betrieb ausgehend von mindestens einem elektrischen Energiespeicher mit elektrischer Energie versorgbar. Im generatorischen Betrieb der oder jeder elektrischen Maschine kann der oder jeder elektrische Energiespeicher von der elektrischen Maschine aufgeladen werden. Bei aus der Praxis bekannten Kraftfahrzeugen sind der oder jeder Kraftstofftank und der oder jeder elektrische Energiespeicher in unterschiedlichen Abschnitten des Aufbaus positioniert.

Aus der US 2009/0315359 A ist ein derartiges Kraftfahrzeug bekannt, bei dem der oder jeder Kraftstofftank und der oder jeder elektrische Energiespeicher in einem gemeinsamen Abschnitt des Aufbaus positioniert sind.

Hiervon ausgehend liegt der vorliegenden Erfindung das Problem zu Grunde ein neuartiges Kraftfahrzeugs zu schaffen. Dieses Problem wird durch ein Kraftfahrzeug gemäß Patentanspruch 1 gelöst.

Beim erfindungsgemäßen Kraftfahrzeug ist die Brennkraftmaschine in Mittelmotoranordnung hinter der Vorderachse und vor der Hinterachse sowie hinter dem gemeinsamen Abschnitt des Aufbaus, in welchem der oder jeder Kraftstofftank und der oder jeder elektrische Energiespeicher positioniert sind, positioniert. Hierdurch ergeben sich eine Vielzahl von Vorteilen. Ein Hauptvorteil liegt darin, dass unabhängig von der konkreten Ausführung und der konkreten Anzahl des oder jedes Kraftstofftanks sowie des oder jedes elektrischen Energiespeichers ein einheitliches Design für ein Kraftfahrzeug möglich ist.

Ohne Änderung des Aufbaus ist es demnach möglich, den oder jeden Kraftstofftank sowie den oder jeden elektrischen Energiespeicher abhängig vom Kundenwunsch auszuwählen und im gemeinsamen Abschnitt des Aufbaus zu positionieren.

Vorzugsweise ist der gemeinsame Abschnitt des Aufbaus, in welchem der oder jeder Kraftstoffstank und der oder jeder elektrische Energiespeicher positioniert sind, in der Nähe eines Schwerpunkts des Kraftfahrzeugs positioniert. Dann, wenn der gemeinsame Abschnitt des Aufbaus, in welchem der oder jeder Kraftstofftank sowie der oder jeder elektrische Energiespeicher positioniert sind, in den Nähe des Schwerpunkts des Kraftfahrzeugs positioniert sind, ergeben sich fahrdynamische Vorteile, da das Fahrverhalten durch ein sich veränderndes Füllvolumen des oder jedes Kraftstofftanks nicht beeinflusst wird.

Nach einer vorteilhaften Weiterbildung der Erfindung sind der oder jeder Kraftstoffstank und der oder jeder elektrische Energiespeicher gemeinsam kühlbar. Durch die Kühlung des oder jedes Kraftstofftanks und damit des im jeweiligen Kraftstofftank bereitgehaltenen Kraftstoff kann die Leistung des Kraftfahrzeugs gesteigert werden. Die gemeinsame Kühlung des oder jedes Kraftstoffstanks und des oder jedes elektrischen Energiespeichers erlaubt einen reduzierten Kühlaufwand und vereinfachten Aufbau eines Kühlsystems.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

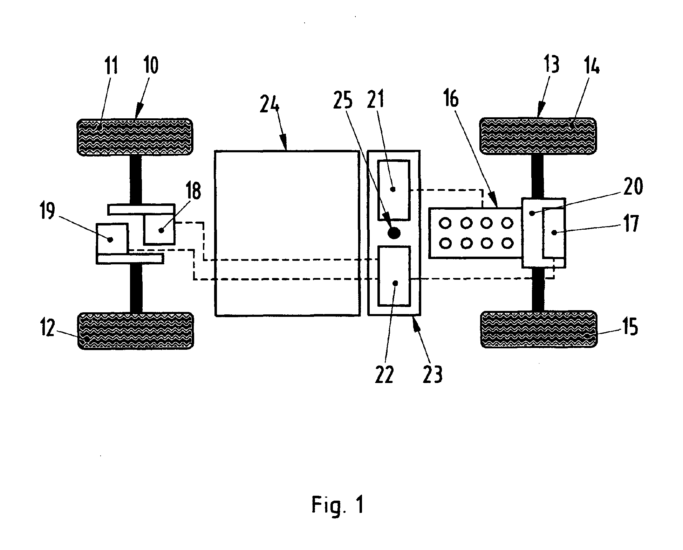

- Fig. 1: eine schematisierte Darstellung eines erfindungsgemäßen Kraftfahrzeugs.

Die hier vorliegende Erfindung betrifft ein Kraftfahrzeug. Nachfolgend wird die Erfindung unter Bezugnahme auf Fig. 1 im Detail beschrieben, wobei Fig. 1 ein bevorzugtes Ausführungsbeispiel eines erfindungsgemäßen Kraftfahrzeugs zeigt. Ein Kraftfahrzeug verfügt über einen Aufbau sowie einen Antriebsstrang.

Vom Antriebsstrang des Kraftfahrzeugs ist in Fig. 1 eine Vorderachse 10 mit zwei Vorderrädern 11, 12 sowie eine Hinterachse 13 mit zwei Hinterrädern 14 und 15 gezeigt. Der Antriebsstrang verfügt gemäß Fig. 1 weiterhin über ein als Hybridantrieb ausgebildetes Antriebsaggregat mit einer Brennkraftmaschine 16 und im gezeigten Ausführungsbeispiel mehreren elektrischen Maschinen 17, 18 und 19.

Die Brennkraftmaschine 16 des Hybridantriebs sowie die elektrische Maschine 17 sind der Hinterachse 13 zugeordnet und treiben gemäß Fig. 1 über ein Getriebe 20 in die Hinterachse 13 ein. Bei der Brennkraftmaschine 16 handelt es sich im gezeigten, bevorzugten Ausführungsbeispiel um eine Otto-Brennkraftmaschine mit acht Zylindern in V-Bauweise, wobei die Brennkraftmaschine 16 in Mittelmotorbauweise zwischen der Vorderachse 10 und der Hinterachse 13 positioniert ist, nämlich hinter der Vorderachse 10 und vor der Hinterachse 13. Beim Getriebe 20 handelt es sich im bevorzugten Ausführungsbeispiel um ein Doppelkupplungsgetriebe, in welches die elektrische Maschine 17 integriert ist.

Im gezeigten Ausführungsbeispiel der Fig. 1 sind die beiden elektrischen Maschinen 18 und 19 der Vorderachse 10 derart zugeordnet, sodass die elektrische Maschine 18 dem Antreiben eines ersten Vorderrads 11 der Vorderachse 10 und die elektrische Maschine 19 dem Antreiben eines zweiten Vorderrads 12 der Vorderachse 10 dient.

Die Brennkraftmaschine 16 des Hybridantriebs ist ausgehend von mindestens einem Kraftstofftank 21 mit Kraftstoff versorgbar. In Fig. 1 ist ein einziger Kraftstofftank 21 gezeigt. Es können jedoch auch mehrere Kraftstofftanks vorhanden sein. Die elektrischen Maschinen 17, 18 und 19 sind im motorischen Betrieb derselben ausgehend von mindestens einem elektrischen Energiespeicher 22 mit elektrischer Energie versorgbar. In Fig. 1 ist ein einziger elektrische Energiespeicher 22 gezeigt, es können jedoch auch mehrere elektrische Energiespeicher vorhanden sein.

Im Sinne der hier vorliegenden Erfindung sind der Kraftstofftank 21 sowie der elektrische Energiespeicher 22 in einem gemeinsamen Abschnitt 23 des Aufbaus des Kraftfahrzeugs positioniert. Dann, wenn mehrere Kraftstofftanks und/oder mehrere elektrische Energiespeicher vorhanden sind, sind dieselben ebenfalls in dem gemeinsamen Abschnitt 23 des Aufbaus des Kraftfahrzeugs positioniert.

Erfindungsgemäß wird demnach zur Positionierung des oder jedes Kraftstofftanks 21 sowie des oder jedes elektrischen Energiespeichers 22 im Aufbau des Kraftfahrzeugs ein gemeinsamer Abschnitt 23 bzw. Bereich bereitgehalten.

Der gemeinsame Abschnitt 23, welcher der gemeinsamen Aufnahme des oder jedes elektrischen Energiespeichers 22 sowie des oder jedes Kraftstofftanks 21 dient, ist gemäß Fig. 1 zwischen der Vorderachse 10 und der Hinterachse 13 positioniert, nämlich hinter der Vorderachse 10 und vor der Brennkraftmaschine 16.

Fig. 1 kann weiterhin entnommen werden, dass dieser gemeinsame Abschnitt 23, in welchem der oder jeder Kraftstofftank 21 und der oder jeder elektrische Energiespeicher 22 gemeinsam positioniert sind, hinter einem Insassenraum 24 des Aufbaus des Kraftfahrzeugs und vor der Brennkraftmaschine 16 positioniert ist.

Vorzugsweise sind die im gemeinsamen Abschnitt 23 des Aufbaus positionierten Baugruppen, also der oder jeder Kraftstofftank 21 der oder jeder elektrische Energiespeicher 22, gemeinsam kühlbar. Gleichzeitig mit der Kühlung des oder jedes elektrischen Energiespeichers 22 kann demnach der Kraftstofftank 21 gekühlt werden. Hierdurch wird der im jeweiligen Kraftstofftank 21 bereitgehaltene Kraftstoff gekühlt, sodass der Brennkraftmaschine 16 gekühlter Kraftstoff zuführbar ist, um so die Leistung der Brennkraftmaschine 16 zu steigern. Bei gemeinsamer Kühlung von elektrischem Energiespeicher 22 und Kraftstofftank 21 kann der Aufbau eines Kühlsystems vereinfacht werden, das für elektrischen Energiespeicher 22 und Kraftstofftank 21 keine separaten Kühlkreisläufe erforderlich sind.

Vorzugsweise ist der gemeinsame Abschnitt 23 und damit der oder jeder im gemeinsamen Abschnitt 23 positionierte Kraftstofftank 21 sowie der oder jeder im gemeinsamen Abschnitt 23 positionierte elektrische Energiespeicher 22 in der Nähe eines Schwerpunkts 25 des Kraftfahrzeugs positioniert. Besonders bevorzugt ist eine Ausgestaltung, in welcher der Schwerpunkt 25 in den gemeinsamen Abschnitt 23 fällt, da hierdurch insbesondere die fahrdynamischen Eigenschaften des Kraftfahrzeugs optimiert werden können.

Der oder jeder im gemeinsamen Abschnitt positionierte elektrische Energiespeicher 22 kann abhängig von der konkreten Konfiguration des Kraftfahrzeugs als Schwungradspeicher oder Batterie ausgebildet sein.

Schwungradspeicher kommen dann zum Einsatz, wenn Schwerpunkt auf ein performantes oder leistungsorientiertes Fahrverhalten gelegt wird. Batterien kommen dann zum Einsatz, wenn Schwerpunkt auf ein kraftstoffreduziertes oder reichweitenmaximiertes Fahrverhalten gelegt wird.

Der oder jeder Kraftstoffstank 21 und der oder jeder elektrische Energiespeicher 22 sind vorzugsweise als modulare aufgebaute Einheit in dem gemeinsamen Abschnitt 23 des Aufbaus positioniert. Hierdurch kann das Kraftfahrzeug ohne Änderungen am Aufbau kundenindividuell im Hinblick auf die Art, Anzahl und Größe von dem oder jedem Kraftstoffstank 21 und dem oder jedem elektrischen Energiespeicher 22 konfiguriert werden.

## Patentansprüche

1. Kraftfahrzeug, mit einem Aufbau und einem Antriebsstrang, wobei der Antriebsstrang eine Vorderachse, eine Hinterachse, ein Antriebsaggregat und ein Getriebe umfasst, wobei das Antriebsaggregat als Hybridantrieb mit einer Brennkraftmaschine und mindestens einer elektrischen Maschine ausgebildet ist, wobei die Brennkraftmaschine ausgehend von mindestens einem Kraftstoffstank mit Kraftstoff versorgbar ist, wobei die oder jede elektrische Maschine im motorischen Betrieb ausgehend von mindestens einem elektrischen Energiespeicher mit elektrischer Energie versorgbar ist, und wobei der oder jeder Kraftstoffstank und der oder jeder elektrische Energiespeicher in einem gemeinsamen Abschnitt des Aufbaus positioniert sind, **dadurch gekennzeichnet, dass** die Brennkraftmaschine (16) in Mittelmotoranordnung hinter der Vorderachse (10) und vor der Hinterachse (13) sowie hinter dem gemeinsamen Abschnitt (23) des Aufbaus, in welchem der oder jeder Kraftstoffstank (21) und der oder jeder elektrische Energiespeicher (22) positioniert sind, positioniert ist.

2. Kraftfahrzeug nach Anspruch 1, **dadurch gekennzeichnet, dass** der Vorderachse (10) mindestens eine elektrische Maschine (18, 19) zugeordnet ist.

3. Kraftfahrzeug nach Anspruch 1 oder 2, **dadurch gekennzeichnet, dass** der Hinterachsachse (13) mindestens eine elektrische Maschine (17) zugeordnet ist.

4. Kraftfahrzeug nach einem der Ansprüche 1 bis 3, **dadurch gekennzeichnet, dass** der oder jeder Kraftstoffstank (21) und der oder jeder elektrische Energiespeicher (22) gemeinsam kühlbar sind.

5. Kraftfahrzeug nach einem der Ansprüche 1 bis 4, **dadurch gekennzeichnet, dass** der oder jeder Kraftstoffstank (21) und der oder jeder elektrische Energiespeicher (22) als modulare aufgebaute Einheit in dem gemeinsamen Abschnitt (23) des Aufbaus positioniert sind.

6. Kraftfahrzeug nach einem der Ansprüche 1 bis 5, **dadurch gekennzeichnet, dass** der oder jeder elektrische Energiespeicher (22) als Schwungradspeicher ausgebildet ist.

7. Kraftfahrzeug nach einem der Ansprüche 1 bis 5, **dadurch gekennzeichnet, dass** der oder jeder elektrische Energiespeicher (22) als Batterie ausgebildet ist.

## Claims

1. Motor vehicle, comprising a body and a drive train, wherein the drive train comprises a front axle, a rear axle, a drive unit and a transmission, wherein the drive unit is designed as a hybrid drive with an internal combustion engine and at least one electric machine, wherein the internal combustion engine is suppliable with fuel from at least one fuel tank, wherein the or each electric machine is suppliable with electric energy from at least one electric energy accumulator in the motor mode, and wherein the or each fuel tank and the or each electric energy accumulator are positioned in a common section of the body, **characterized in that** the internal combustion engine (16) is arranged in a mid-engine arrangement to the rear of the front axle (10) and in front of the rear axle (13) and to the rear of the common section (23) of the body, in which the or each fuel tank (21) and the or each electric energy accumulator (22) are positioned.

2. Motor vehicle according to Claim 1, **characterized in that** at least one electric machine (18, 19) is assigned to the front axle (10).

3. Motor vehicle according to Claim 1 or 2, **characterized in that** at least one electric machine (17) is assigned to the rear axle (13).

4. Motor vehicle according to one of Claims 1 to 3, **characterized in that** the or each fuel tank (21) and the or each electric energy accumulator (22) are jointly coolable.

5. Motor vehicle according to one of Claims 1 to 4, **characterized in that** the or each fuel tank (21) and the or each electric energy accumulator (22) are positioned as a unit of modular construction in the common section (23) of the body.

6. Motor vehicle according to one of Claims 1 to 5, **characterized in that** the or each electric energy accumulator (22) is designed as a flywheel accumulator.

7. Motor vehicle according to one of Claims 1 to 5, **characterized in that** the or each electric energy accumulator (22) is designed as a battery.

## Revendications

1. Véhicule à moteur, comprenant une carrosserie et une chaîne cinématique, la chaîne cinématique comportant un essieu avant, un essieu arrière, une unité d'entraînement et une transmission, l'unité d'entraînement étant réalisée sous forme d'entraînement hybride comprenant un moteur à combustion interne et au moins une machine électrique, le moteur à combustion interne pouvant être alimenté en carburant à partir d'au moins un réservoir de carburant, la ou chaque machine électrique pouvant être alimentée en énergie électrique à partir d'au moins un accumulateur d'énergie électrique lors du fonctionnement motorisé, et le ou chaque réservoir de carburant et le ou chaque accumulateur d'énergie électrique étant positionnés dans une partie commune de la carrosserie, **caractérisé en ce que** le moteur à combustion interne (16) est positionné en agencement à moteur central derrière l'essieu avant (10) et devant l'essieu arrière (13) ainsi que derrière la partie commune (23) de la carrosserie, dans laquelle le ou chaque réservoir de carburant (21) et le ou chaque accumulateur d'énergie électrique (22) sont positionnés.

2. Véhicule à moteur selon la revendication 1, **caractérisé en ce qu'**au moins une machine électrique (18, 19) est associée à l'essieu avant (10).

3. Véhicule à moteur selon la revendication 1 ou 2, **caractérisé en ce qu'**au moins une machine électrique (17) est associée à l'essieu arrière (13).

4. Véhicule à moteur selon l'une quelconque des revendications 1 à 3, **caractérisé en ce que** le ou chaque réservoir de carburant (21) et le ou chaque accumulateur d'énergie électrique (22) peuvent être refroidis en commun.

5. Véhicule à moteur selon l'une quelconque des revendications 1 à 4, **caractérisé en ce que** le ou chaque réservoir de carburant (21) et le ou chaque accumulateur d'énergie électrique (22) sont positionnés en tant qu'unité de construction modulaire dans la partie commune (23) de la carrosserie.

6. Véhicule à moteur selon l'une quelconque des revendications 1 à 5, **caractérisé en ce que** le ou chaque accumulateur d'énergie électrique (22) est réalisé sous forme d'accumulateur à volant d'inertie.

7. Véhicule à moteur selon l'une quelconque des revendications 1 à 5, **caractérisé en ce que** le ou chaque accumulateur d'énergie électrique (22) est réalisé sous forme de batterie.
